# FASCICULE DE BREVET EUROPEEN

(11) **EP 3 638 572 B1**
(45) Date de publication et mention de la délivrance du brevet: **28.07.2021**
(21) Numéro de dépôt: 18782096.4
(22) Date de dépôt: 12.06.2018
(51) Int. Cl.: B62D 63/06

(54) **REMORQUE DE TRANSPORT PLIANTE**
ZUSAMMENKLAPPBARER TRANSPORTBEHÄLTER
COLLAPSIBLE TRANSPORT TRAILER

(30) Priorité: 12.06.2017 FR 1755216
(43) Date de publication de la demande: 22.04.2020
(73) Titulaire: TRIGANO REMORQUES, 75019 Paris (FR)
(72) Inventeur: VALEMBOIS, Guy, 31650 Lauzerville (FR)
(74) Mandataire: Cabinet Bleger-Rhein-Poupon
(86) Numéro de dépôt international: PCT/FR2018/000170
(87) Numéro de publication internationale: WO 2018/229363

(56) Documents cités:
- GB-A- 2 359 281
- US-A1- 2006 043 768
- US-A1- 2014 312 593

## Description

La présente invention a trait à une remorque de transport pliante.

Cette invention concerne le domaine de la fabrication des dispositifs pour transporter des charges.

Cette invention trouvera une application particulièrement appropriée, mais cependant aucunement limitative, dans le domaine des remorques pliantes, destinées à être attelées à des véhicules personnels, et conçues pour transporter des charges légères ou moyennes, en particulier dont la masse n'excède pas une tonne.

L'on connaît, d'ores et déjà, de telles remorques de transport pliantes qui comportent un plateau. Une telle remorque comporte, aussi, au moins un élément, qui est mobile par rapport à ce plateau, et qui peut être constitué par un pied, par une ridelle, par un support de roue ou autre. Une telle remorque comporte, alors, au moins un moyen de montage pour monter un tel élément de manière mobile par rapport au plateau, ceci entre, d'une part, une position dépliée par rapport au plateau et correspondant à une position d'utilisation de la remorque (notamment de chargement et/ou de déchargement et/ou de transport d'une charge) et, d'autre part, une position repliée par rapport à ce plateau et correspondant à une position de rangement ou de stockage de la remorque pliante. Une telle remorque pliante comporte, également, au moins un système d'immobilisation pour immobiliser, de manière réversible, un tel élément mobile par rapport audit plateau et/ou par rapport à un autre élément mobile, ceci dans au moins une position.

A ce propos, on observera que, dans le cas d'un élément mobile constitué par un pied, celui-ci est usuellement rendu solidaire d'un timon d'attelage à un véhicule et est complété par des moyens de commande pour commander son dépliement et son repliement. De tels moyens de commande comportent une tige filetée et une manivelle et constituent, également, un système d'immobilisation pour immobiliser le pied dans une position repliée et dans au moins une position dépliée. On observera que, pour amener un tel pied d'une position repliée à une position dépliée (et inversement), il est nécessaire d'actionner manuellement la manivelle des moyens de commande (et, donc, le système d'immobilisation) ce qui constitue une opération longue et fastidieuse.

Cependant, dans le cas d'un élément mobile constitué par une ridelle, le système d'immobilisation est conçu pour assurer une immobilisation d'une telle ridelle par rapport à une autre ridelle adjacente et, aussi et par conséquent, par rapport au plateau. Un tel système d'immobilisation est constitué par une fermeture à levier qui constitue un organe encombrant et qui, lorsqu'il est mal replié, est susceptible d'entraver le repliement de la ridelle.

Par le document US2014/312593 on connait une remoque pliable conforme au préambule de la revendication 1.

Aussi une première démarche inventive de l'invention a consisté à imaginer un système d'immobilisation qui puisse convenir à différents types d'éléments mobiles que comporte une remorque. Une autre démarche inventive a consisté à simplifier la conception d'un tel système d'immobilisation mais également à simplifier la manipulation d'un tel système d'immobilisation, voire à actionner un tel système d'immobilisation simplement en manipulant l'élément mobile ou une pièce qui y est associée. Encore une autre démarche inventive a consisté à imaginer un système d'immobilisation permettant de garantir une telle immobilisation.

La présente invention se veut de remédier aux inconvénients des remorques pliables de l'état de la technique, plus particulièrement aux inconvénients des systèmes d'immobilisation que comporte une telle remorque.

A cet effet, l'invention concerne une remorque pliable comportant un plateau, au moins un élément mobile par rapport à ce plateau, au moins un moyen de montage pour monter un tel élément de manière mobile par rapport au plateau ceci entre une position dépliée et une position repliée par rapport à ce plateau, et au moins un système d'immobilisation pour immobiliser de manière réversible un tel élément mobile par rapport audit plateau et/ou par rapport à un autre élément mobile, ceci dans au moins une position. Un tel système d'immobilisation comporte, d'une part, au moins un organe de verrouillage élastique qui est associé à un tel élément mobile et, d'autre part, au moins un organe de verrouillage complémentaire, qui est associé au plateau ou à un tel élément mobile, et qui coopère avec ledit au moins un organe de verrouillage élastique ceci en vue de l'immobilisation d'un tel élément mobile par rapport au plateau et/ou à l'autre élément mobile.

Cette remorque pliante est caractérisée par le fait qu'elle comporte au moins un ressort, qui est associé à l'élément mobile ou à l'un des éléments mobiles, et qui comporte au moins une branche qui comporte l'organe de verrouillage élastique ou l'un des organes de verrouillage élastiques.

Une autre caractéristique consiste en ce que le système d'immobilisation comporte, d'une part, au moins une paire d'organes de verrouillage élastiques qui est associée à un tel élément mobile et, d'autre part, au moins une paire d'organes de verrouillage complémentaires, qui est associée au plateau ou à un tel élément mobile, et que chaque organe de verrouillage complémentaire d'une telle paire d'organes de verrouillage complémentaires est configuré pour coopérer avec l'un des organes de verrouillage élastiques d'une telle paire d'organes de verrouillage élastiques.

En fait, la remorque pliante comporte au moins un ressort, qui est associé à l'élément mobile ou à l'un des éléments mobiles, et qui comporte au moins deux branches, qui sont mobiles l'une par rapport à l'autre, et qui comportent chacune l'un des organes de verrouillage élastiques de la paire d'organes de verrouillage élastiques ou de l'une des paires d'organes de verrouillage élastiques.

Une autre caractéristique consiste en ce que la remorque pliante comporte au moins un moyen de commande pour commander le passage de l'organe de verrouillage élastique ou d'au moins l'un des organes de verrouillage élastiques d'une position active de verrouillage à une position inactive de verrouillage par rapport à l'organe de verrouillage complémentaire ou à au moins l'un des organes de verrouillage complémentaires.

Une caractéristique additionnelle concerne le fait que l'élément mobile est constitué par un pied qui comporte ledit au moins un organe de verrouillage élastique tandis que le moyen de montage est associé au plateau en étant rendu solidaire de ce plateau et comporte ledit au moins un organe de verrouillage complémentaire.

Un tel élément mobile peut aussi être constitué par un support de roue tandis que le système d'immobilisation comporte, encore, d'une part, un premier bras, qui est associé à un tel élément mobile, et qui comporte ledit au moins un organe de verrouillage élastique et, d'autre part, un deuxième bras, qui est associé au plateau, qui est mobile en rotation par rapport au premier bras, et qui comporte ledit au moins un organe de verrouillage complémentaire.

Un tel élément mobile peut, encore, être constitué par une ridelle qui comporte ledit au moins un organe de verrouillage élastique tandis que le système d'immobilisation comporte, encore, un loquet, qui est associé à ladite ridelle en étant monté de manière mobile sur cette ridelle, qui comporte ledit au moins un organe de verrouillage complémentaire, et qui comporte un crochet d'accrochage configuré pour coopérer avec une autre ridelle que comporte la remorque, ceci en vue d'une immobilisation de cette ridelle par rapport au plateau.

Ainsi, la remorque pliable comporte un système d'immobilisation qui comporte, d'une part, au moins un organe de verrouillage élastique qui est associé à un élément mobile et, d'autre part, au moins un organe de verrouillage complémentaire, qui est associé au plateau ou à un tel élément mobile, et qui coopère avec ledit au moins un organe de verrouillage élastique ceci en vue de l'immobilisation d'un tel élément mobile par rapport au plateau et/ou à un autre élément mobile.

La présence d'un tel organe de verrouillage élastique permet, avantageusement, après avoir commandé (notamment manuellement) le passage de cet organe de verrouillage d'une position active de verrouillage à une position inactive de verrouillage (plus particulièrement pour pouvoir déplacer un élément mobile par rapport au plateau), de permettre à cet organe de verrouillage élastique d'adopter à nouveau une position active de verrouillage sous l'effet de son élasticité et de manière automatique.

La présence d'un tel organe de verrouillage élastique permet, également et sous l'effet du déplacement d'une pièce associée au plateau ou à l'élément mobile, de commander, sous l'effet du déplacement de cette pièce, d'une part et dans un premier temps, le passage de cet organe de verrouillage d'une position active de verrouillage à une position inactive de verrouillage et, d'autre part, dans un deuxième temps et sous l'effet de l'élasticité de cet organe de verrouillage, le passage de la position inactive de verrouillage à la position active de verrouillage.

De plus, la remorque comporte au moins un ressort, qui est associé à l'élément mobile ou à l'un des éléments mobiles, et qui comporte au moins une branche qui comporte l'organe de verrouillage élastique ou l'un des organes de verrouillage élastiques.

Ainsi, l'organe de verrouillage élastique du système d'immobilisation est constitué par une partie d'une branche que comporte un ressort. Un tel organe de verrouillage élastique présente l'avantage d'être d'une grande simplicité, d'une grande efficacité, d'une grande fiabilité, d'une grande facilité à concevoir, à implanter et à commander.

Parallèlement, la remorque comporte au moins un logement, qui est associé au plateau, à l'élément mobile ou à l'un des éléments mobiles, et qui constitue l'organe de verrouillage complémentaire ou l'un des organes de verrouillage complémentaires. Un tel organe de verrouillage complémentaire présente les mêmes avantages que ceux de l'organe de verrouillage élastique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective d'une remorque pliable conforme à l'invention, ceci en position dépliée ;
- la figure 2 est une vue schématisée et de face d'une remorque pliable conforme à l'invention, ceci en position repliée ;
- la figure 3 est une vue schématisée et en perspective d'un élément mobile constitué par un pied et d'un moyen de montage de cet élément mobile, ceci en position dépliée du pied ;
- la figure 4 est une vue similaire à la figure 3 et correspondant à l'élément mobile constitué par un pied en position repliée ;
- la figure 5 est une vue schématisée et en éclaté de l'élément mobile et du moyen de montage de cet élément mobile illustrés figures 3 et 4, ceci en position repliée de cet élément mobile ;
- la figure 6 est une vue schématisée, en perspective et correspondant à un détail d'un élément mobile constitué par un support de roue, ceci en position dépliée de ce support de roue ;
- la figure 7 est une vue similaire à la figure 6 et correspondant à l'élément mobile constitué par un support de roue, ceci en position repliée ;
- la figure 8 est une vue schématisée, en perspective, et correspondant à un détail d'un élément mobile constitué par une ridelle, ceci en position dépliée et dans l'attente d'une immobilisation ;
- la figure 9 est une vue similaire à la figure 8 et correspondant à l'élément mobile constitué par une ridelle, ceci en position dépliée et immobilisée.

La présente invention concerne le domaine de la fabrication des dispositifs pour transporter des charges.

Cette invention concerne, plus particulièrement, une remorque pliante 1.

Une telle remorque pliante 1 comporte un plateau 2 ainsi qu'au moins un élément mobile (3 ; 3') par rapport à ce plateau 2.

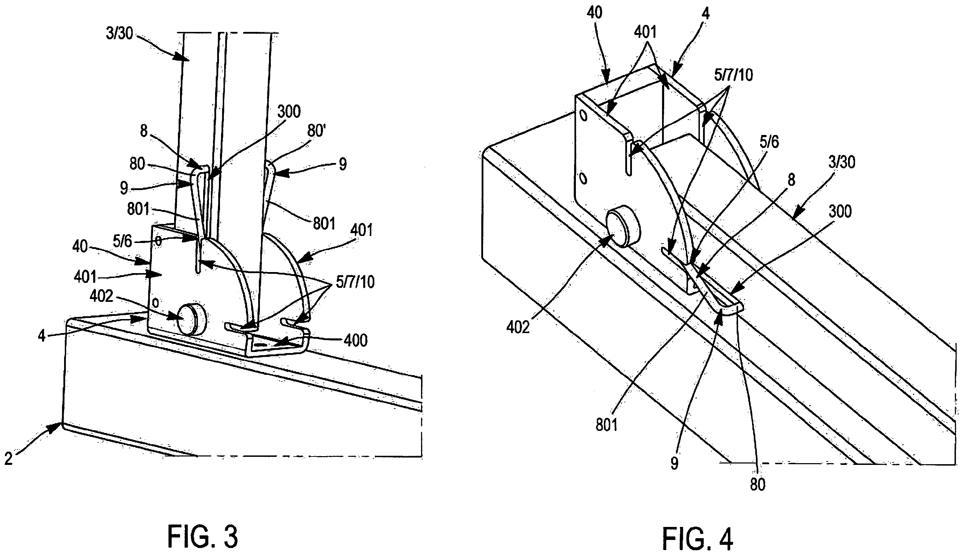

Tel que visible figures 3 à 5, un tel élément mobile 3 peut être constitué par un pied 30 conçu pour reposer au sol, ceci dans l'attente du chargement de la remorque pliante 1 avec une charge, du déchargement de cette remorque pliante 1, ou de l'attelage de cette remorque pliante 1 à un véhicule.

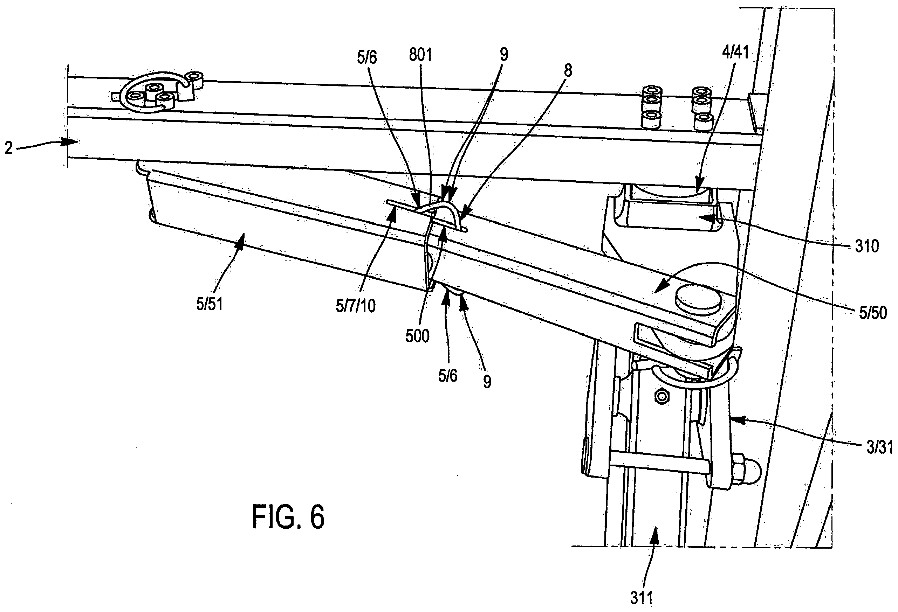

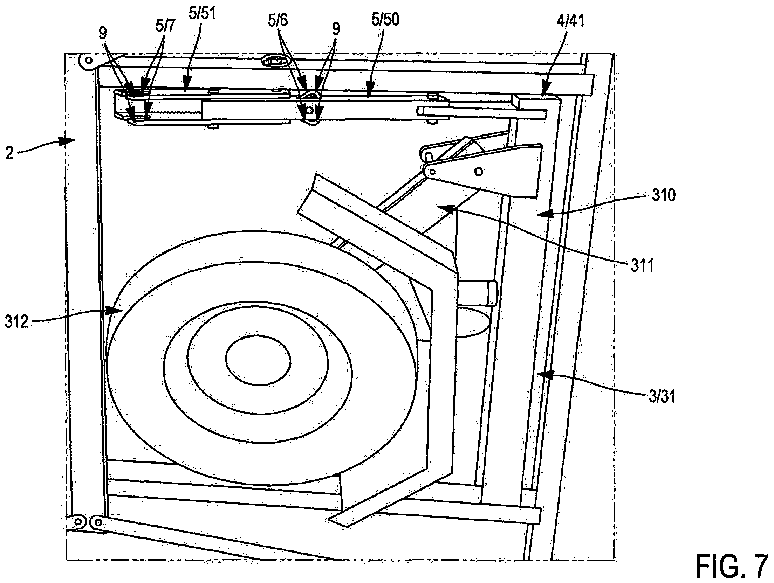

Tel que visible figures 6 et 7, un tel élément mobile (3 ; 3') peut, aussi, être constitué par un support de roue (31 ; 31'). Un tel support de roue (31 ; 31') peut, alors, comporter, d'une part, une poutre support 310 et, d'autre part, une fourche 311, rendue solidaire de ladite poutre support 310 (plus particulièrement en étant rapportée fixement sur cette poutre support 310), et par rapport à laquelle une roue 312 est montée (plus particulièrement directement) en rotation.

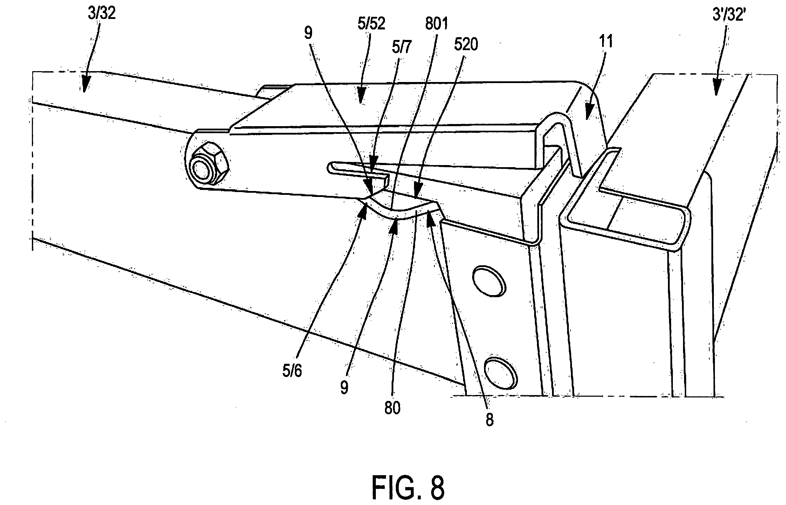

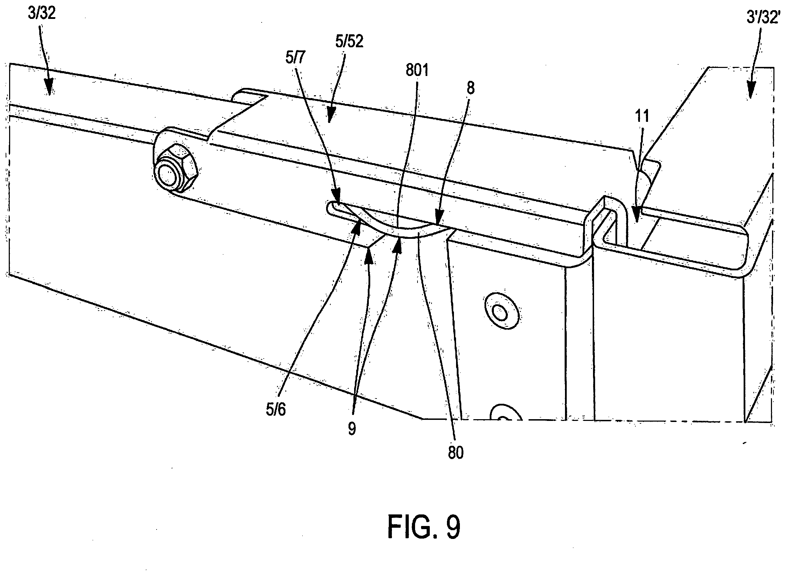

Cependant et comme visible figures 8 et 9, un tel élément mobile (3 ; 3') peut, encore, être constitué par une ridelle (32 ; 32').

En fait, la remorque pliante 1 conforme à l'invention peut comporter plusieurs éléments mobiles (3 ; 3') tels que susmentionnés, à savoir un pied 30 et/ou au moins un support de roue (31 ; 31') et/ou au moins une ridelle (32 ; 32').

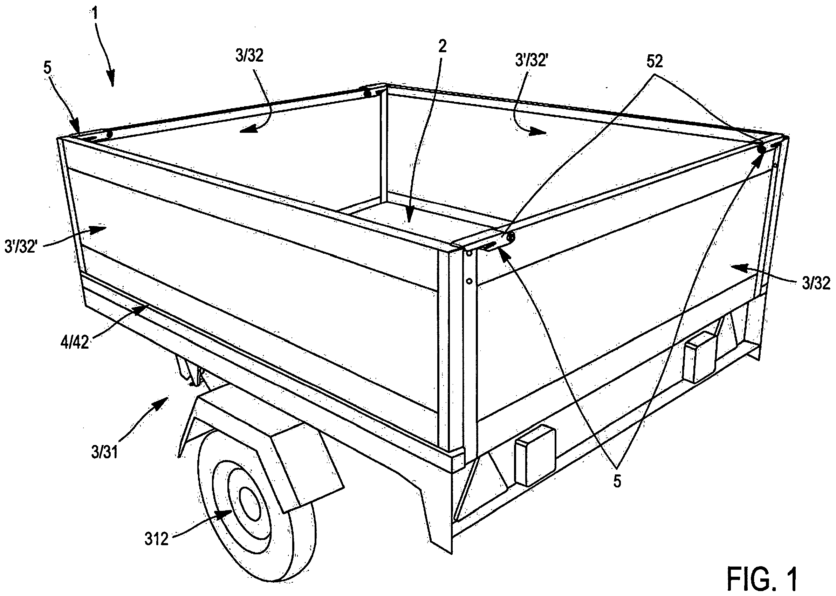

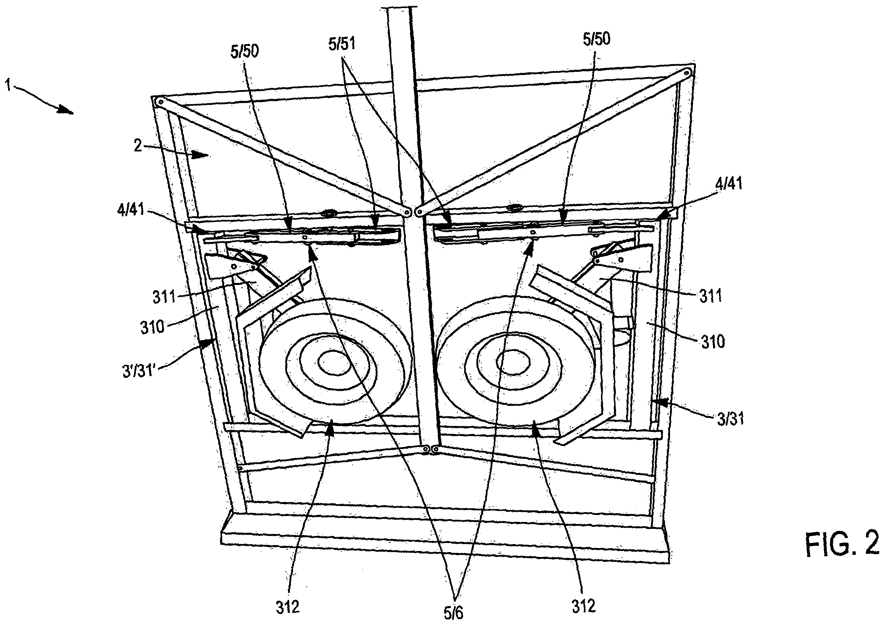

Une telle remorque pliante 1 comporte, également, au moins un moyen de montage 4 pour monter un tel élément mobile (3 ; 3') de manière mobile par rapport au plateau 2 ceci entre une position dépliée (figures 1, 3, 6, 8 et 9) et une position repliée (figures 2, 4, 5 et 7) par rapport à ce plateau 2.

A ce propos, on observera que, dans le cas d'un élément mobile 3 constitué par un pied 30, un tel moyen de montage 4 est associé au plateau 2, ceci en étant rendu solidaire (plus particulièrement de manière fixe) de ce plateau 2, notamment en étant rapporté sur ce plateau 2.

En fait, dans ce cas, un tel moyen de montage 4 comporte, d'une part, une chape 40 comportant une embase 400 rendue solidaire (plus particulièrement de manière fixe) du plateau 2 (notamment en étant rapporté sur ce plateau 2) ainsi que deux ailes 401, qui s'étendent (plus particulièrement de manière perpendiculaire) à partir de l'embase 400, et entre lesquelles s'étend une partie du pied 30. D'autre part, un tel moyen de montage 4 comporte un arbre 402 rendu solidaire des deux ailes 401. Le pied 30 est, alors, monté en rotation autour de cet arbre 402 ainsi que par rapport aux deux ailes 401 de la chape 40.

Dans le cas d'un élément mobile (3 ; 3') constitué par un support de roue (31 ; 31'), un moyen de montage 4 peut adopter la forme d'un plateau tournant 41 comportant, d'une part, une embase fixe rendue solidaire (plus particulièrement de manière fixe) du plateau 2 (notamment en étant rapportée sur ce plateau 2) et, d'autre part, un plateau mobile, monté en rotation par rapport à ladite embase fixe, et rendu solidaire (plus particulièrement de manière fixe) de l'élément mobile 3 (notamment en étant rapporté sur cet élément mobile 3), plus particulièrement de la poutre support 310 du support de roue (31 ; 31').

Finalement et dans le cas d'un élément mobile (3 ; 3') constitué par une ridelle (32 ; 32'), un tel moyen de montage 4 peut adopter la forme d'une charnière 42 ou analogue.

Ladite remorque pliante 1 comporte, encore, au moins un système d'immobilisation 5 pour immobiliser de manière réversible un tel élément mobile (3 ; 3') par rapport audit plateau 2 et/ou par rapport à un autre élément mobile (3' ; 3), ceci dans au moins une position.

Selon l'invention, un tel moyen d'immobilisation 5 comporte au moins un organe de verrouillage élastique 6 qui est associé (directement ou indirectement comme il sera décrit dans la suite de la description) à un tel élément mobile (3 ; 3'). Un tel système d'immobilisation 5 comporte, également, au moins un organe de verrouillage complémentaire 7, qui est associé (directement ou indirectement comme il sera décrit dans la suite de la description) au plateau 2 ou à un tel élément mobile (3 ; 3'), et qui coopère avec ledit au moins un organe de verrouillage élastique 6 ceci en vue de l'immobilisation d'un tel élément mobile (3 ; 3') par rapport au plateau 2 et/ou à l'autre élément mobile (3' ; 3).

Cependant et selon un mode de réalisation préféré, le système d'immobilisation 5 comporte, en fait, d'une part, au moins une paire d'organes de verrouillage élastiques 6 qui est associée (directement ou indirectement comme il sera décrit dans la suite de la description) à un tel élément mobile (3 ; 3') et, d'autre part, au moins une paire d'organes de verrouillage complémentaires 7, qui est associée (directement ou indirectement comme il sera décrit dans la suite de la description) au plateau 2 ou à un tel élément mobile (3 ; 3'), et que chaque organe de verrouillage complémentaire 7 d'une telle paire d'organes de verrouillage complémentaires 7 est configuré pour coopérer avec l'un des organes de verrouillage élastiques 6 d'une telle paire d'organes de verrouillage élastiques 6.

Tel que mentionné ci-dessus, la remorque pliante 1 peut comporter plusieurs éléments mobiles (3 ; 3'). Dans ce cas, cette remorque pliante 1 comporte, alors, également, d'une part, plusieurs paires d'organes de verrouillage élastiques 6 associées, chacune, à l'un des éléments mobiles (3 ; 3') et, d'autre part, plusieurs paires d'organes de verrouillage complémentaires 7.

Dans le cas d'éléments mobiles (3 ; 3') constitués par un pied 30 ou par des supports de roue (31 ; 31'), ces paires d'organes de verrouillage complémentaires 7 peuvent être associées, chacune (et notamment de manière indirecte), au plateau 2 comme cela ressortira de la suite de la description.

Cependant et dans le cas d'éléments mobiles (3 ; 3') constitués par des ridelles (32 ; 32'), ces paires d'organes de verrouillage complémentaires 7 peuvent être associées, chacune (et notamment de manière indirecte), à un tel élément mobile (3 ; 3'), comme cela ressortira, là encore, de la suite de la description.

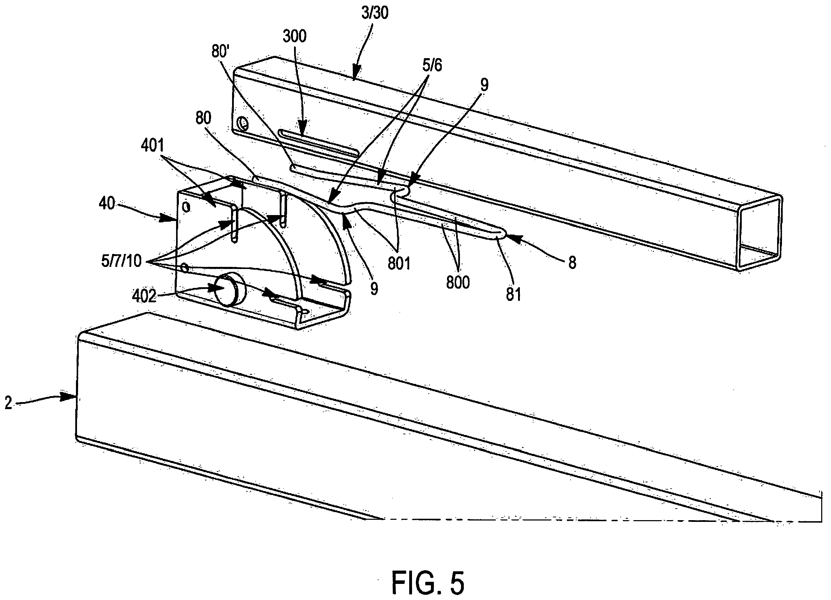

Selon un mode de réalisation particulier, le système d'immobilisation 5 comporte, d'une part, une paire d'organes de verrouillage 6 qui est associée (directement ou indirectement comme il sera décrit dans la suite de la description) à un tel élément mobile 3 et, d'autre part, plusieurs paires d'organes de verrouillage complémentaires 7, qui sont associées (directement ou indirectement comme il sera décrit dans la suite de la description) au plateau 2 (cas particulier d'un élément mobile 3 constitué par un pied 30, figures 3 à 5) ou à un tel élément mobile 3, et qu'une de ces paires d'organes de verrouillage complémentaires 7 coopère avec la paire d'organes de verrouillage élastique 6 pour une immobilisation de l'élément mobile 3 (constitué par un pied 30) dans une position déployée (figure 3) tandis qu'une autre de ces paires d'organes de verrouillage complémentaires 7 coopère avec la paire d'organes de verrouillage élastiques 6 pour une immobilisation de l'élément mobile 3 (constitué par un pied 30) dans une position repliée (figures 4 et 5).

Une autre caractéristique de l'invention consiste en ce que la remorque pliante 1 comporte au moins un ressort 8 qui est associé (directement ou indirectement comme il sera décrit dans la suite de la description) à l'élément mobile 3 ou à l'un des éléments mobiles (3 ; 3') de cette remorque pliante 1. Un tel ressort 8 comporte au moins une branche (80 ; 80') qui comporte l'organe de verrouillage élastique 6 ou l'un des organes de verrouillage élastiques 6.

Tel que mentionné ci-dessus, la remorque pliante 1 peut comporter plusieurs éléments mobiles (3 ; 3'), plus particulièrement un pied 30 et/ou au moins un support de roue (31 ; 31') et/ou au moins une ridelle (32 ; 32'). Dans ce cas, cette remorque pliante 8 comporte, alors, également, plusieurs ressorts 8 qui sont associés, chacun (directement ou indirectement comme il sera décrit dans la suite de la description), à l'un des éléments mobiles (3 ; 3') et qui comportent, chacun, au moins une branche (80 ; 80') qui comporte l'organe de verrouillage élastique 6 ou l'un des organes de verrouillage élastiques 6.

En fait et selon un mode de réalisation préféré de l'invention, la remorque pliante 1 comporte au moins un ressort 8, qui est associé à l'élément mobile 3 ou à l'un des éléments mobiles (3 ; 3'), et qui comporte au moins deux branches (80 ; 80'), qui sont mobiles l'une (80 ; 80') par rapport à l'autre (80' ; 80), et qui comportent chacune l'un des organes de verrouillage élastiques 6 de la paire d'organes de verrouillage élastiques 6 ou de l'une des paires d'organes de verrouillage élastiques 6.

Dans le cas d'un remorque pliante 1 comportant plusieurs éléments mobiles (3 ; 3'), cette remorque pliante 1 peut, alors, comporter plusieurs ressorts 8, d'une part, qui sont associés, chacun, à l'un des éléments mobiles (3 ; 3') et, d'autre part, qui comportent, chacun, deux branches (80 ; 80').

En fait, un tel ressort 8 comporte, d'une part, deux branches (80 ; 80') et, d'autre part, une portion de raccordement 81 de ces deux branches (80 ; 80').

Selon un mode de réalisation préféré et tel que visible sur la figure 5, les deux branches (80 ; 80') d'un tel ressort 8, s'étendent selon un même plan, et sont symétriques par rapport à un plan médian perpendiculaire au plan selon lequel s'étendent ces deux branches (80 ; 80').

Encore une autre caractéristique consiste en ce qu'un tel ressort 8 est constitué par un fil (notamment métallique) déformé.

Une caractéristique additionnelle concerne le fait que la ou les branches (80 ; 80') du ou des ressorts 8 comportent, d'une part, au moins une portion rectiligne 800 s'étendant selon une direction déterminée et, d'autre part, une portion latérale 801, qui s'étend dans le prolongement d'une telle portion rectiligne 800 ainsi que latéralement par rapport à cette direction déterminée, et dont au moins une partie constitue l'organe de verrouillage élastique 6 ou l'un des organes de verrouillage élastiques 6.

A ce propos, on observera que cette portion latérale 801 comporte, encore, une autre partie qui constitue, au moins en partie, un moyen de commande 9 pour commander (plus particulièrement manuellement) l'organe de verrouillage élastique 6, ceci comme cela ressortira de la suite de la description.

Tel que mentionné ci-dessus, la remorque pliante 1 comporte au moins un moyen d'immobilisation 5 qui comporte au moins un organe de verrouillage complémentaire 7.

A ce propos, on observera que cette remorque pliante 1 comporte, en fait, au moins un logement 10 qui constitue un tel organe de verrouillage complémentaire 7 ou l'un des organes de verrouillage complémentaires 7.

Un tel logement 10 peut être associé (directement ou indirectement comme il sera décrit dans la suite de la description) au plateau 2, plus particulièrement lorsque l'élément mobile 3 est constitué par un pied 30 (figures 3 à 5) ou par un support de roue (31 ; 31', figures 6 et 7).

Cependant, un tel logement 10 peut, encore, être associé (directement ou indirectement comme il sera décrit dans la suite de la description) à l'élément mobile 3 ou à l'un des éléments mobiles (3 ; 3'), plus particulièrement lorsqu'un tel élément mobile (3 ; 3') est constitué par une ridelle (32 ; 32', figures 8 et 9).

En fait et selon un mode de réalisation préféré, cette remorque pliante 1 comporte, de préférence, au moins une paire de logements 10, d'une part, qui est associée (directement ou indirectement comme il sera décrit dans la suite de la description), selon le cas, au plateau 2, à l'élément mobile 3 ou à l'un des éléments mobiles (3 ; 3'), et, d'autre part, qui constitue la paire d'organes de verrouillage complémentaires 7 ou l'une des paires d'organes de verrouillage complémentaires 7 mentionnées ci-dessus.

Selon un mode particulier de réalisation, la remorque pliante 1 comporte plusieurs paires de logements 10 qui constituent, chacune, l'une des paires d'organes de verrouillage complémentaires 7. Un tel mode particulier de réalisation a été illustré figures 3 à 5 pour une remorque pliante 1 comportant un élément mobile 3 constitué par un pied 30.

Quoi qu'il en soit, un tel logement 10 adopte, plus particulièrement, la forme d'une fente que comporte une pièce (chape 40, deuxième bras 51) associée au plateau 2 (un tel logement 10 étant, alors, associé indirectement à ce plateau 2), ou une pièce (loquet 52) associée à l'élément mobile 3, ou à l'un des éléments mobiles (3 ; 3') (un tel logement 10 étant, alors, associé indirectement à un tel élément mobile 3 ; 3'), comme il sera décrit dans la suite de la description.

Une autre caractéristique consiste en ce que la remorque pliante 1 comporte au moins un moyen de commande 9 pour commander le passage de l'organe de verrouillage élastique 6 ou d'au moins l'un des organes de verrouillage élastiques 6 d'une position active de verrouillage à une position inactive de verrouillage par rapport à l'organe de verrouillage complémentaire 7 ou à au moins l'un des organes de verrouillage complémentaires 7.

Selon un premier type de réalisation, un tel moyen de commande 9 est conçu pour être commandé manuellement, plus particulièrement par les doigts d'un utilisateur de la remorque 1.

Conformément à ce premier type de réalisation, c'est le ou les ressorts 8 mentionnés ci-dessus qui comportent un tel moyen de commande 9.

De préférence, un tel moyen de commande 9 est constitué par une partie de la portion latérale 801 de la ou des branches (80 ; 80') du ou des ressorts 8, plus particulièrement une partie autre que la partie de cette portion latérale 801 d'une telle branche (80 ; 80') constituant l'organe de verrouillage élastique 6 ou l'un des organes de verrouillage élastiques 6.

Un moyen de commande 9 conforme à ce premier type de réalisation peut être associé (directement ou indirectement comme il sera décrit dans la suite de la description) à un élément mobile (3 ; 3') sous la forme d'un pied 30, d'un support de roue (31 ; 31') et/ou d'une ridelle (32 ; 32'), ceci comme visible sur les figures en annexe.

Selon un deuxième type de réalisation, un tel moyen de commande 9 est conçu pour commander le passage de l'organe de verrouillage élastique 6 ou d'au moins l'un des organes de verrouillage élastiques 6 d'une position active de verrouillage à une position inactive de verrouillage, ceci sous l'impulsion du déplacement de l'élément mobile 3 par rapport au plateau 2 (plus particulièrement dans le cas d'un élément mobile 3 constitué par un support de roue 31 ; 31') et/ou du déplacement d'au moins une pièce (premier bras 50 ou loquet 52) associée à cet élément mobile 3 et par rapport à cet élément mobile 3 (plus particulièrement dans le cas d'un élément mobile 3 ; 3' constitué par un support de roue 31 ; 31' ou d'une ridelle 32 ; 32') et/ou du déplacement d'au moins une pièce (deuxième bras 51) associée au plateau 2 et par rapport au plateau 2 (plus particulièrement dans le cas d'un élément mobile 3 ; 3' constitué par un support de roue 31 ; 31') comme il sera décrit dans la suite de la description.

Selon un mode particulier de réalisation, c'est, plus particulièrement, une telle pièce (associée à l'élément mobile 3 ; 3' ou au plateau 2) qui comporte un tel moyen de commande 9.

Dans la suite de la description, il sera décrit différents éléments mobiles (3 ; 3') ainsi que le ou les systèmes d'immobilisation 5 particulièrement adaptés à chacun de ces éléments mobiles (3 ; 3').

Ainsi, tel que mentionné ci-dessus, la remorque pliante 1 comporte au moins un élément mobile (3 ; 3').

Selon une première variante, un tel élément mobile (3 ; 3') peut être constitué par un pied 30 tel que mentionné ci-dessus et tel qu'illustré figures 3 à 5.

C'est, plus particulièrement, ce pied 30 qui comporte, alors, ledit au moins un organe de verrouillage élastique 6 qui est, alors, associé (plus particulièrement directement) à un tel élément mobile 3 sous forme d'un tel pied 30.

A ce propos, on observera que ce pied 30 comporte, en fait, au moins un ressort 8, qui présente les caractéristiques décrites ci-dessus, et qui comporte en particulier au moins une branche (80 ; 80') qui comporte un tel organe de verrouillage élastique 6 ou l'un de ces organes de verrouillage élastiques 6. Plus précisément et tel que décrit ci-dessus, un tel organe de verrouillage élastique 6 adopte la forme d'une partie de la portion latérale 801 que comporte la branche 80 ou l'une des branches (80 ; 80') de ce ressort 8.

En fait, un tel ressort 8 est positionné en partie à l'intérieur du pied 30 (c'est plus particulièrement la portion rectiligne 800 de la ou des branches (80 ; 80') de ce ressort 8 qui s'étend à l'intérieur de ce pied 30) et s'étend en partie à l'extérieur de ce pied 30 (c'est plus particulièrement la portion latérale 801 de la ou des branches 80 ; 80' de ce ressort 8 qui s'étend à l'extérieur de ce pied 30). Ce pied 30 comporte, alors, latéralement, au moins une fente 300 (plus particulièrement deux faces opposées de ce pied 30 comportent chacune une telle fente 300) au travers de laquelle s'étend la portion latérale 801, que comporte la branche 80 ou l'une des. branches (80 ; 80') du ressort 8, et qui comporte l'organe de verrouillage élastique 6 ou l'un des organes de verrouillage élastique 6.

Un mode préféré de réalisation consiste en ce qu'un tel pied 30 comporte, en fait, au moins une paire d'organes de verrouillage élastiques 6 présentant, chacune, les caractéristiques décrites ci-dessus. Dans un pareil cas, le pied 30 comporte deux fentes 300 (plus particulièrement les deux faces opposées de ce pied 30 comportent chacune une telle fente 300) au travers desquelles s'étendent les portions latérales 801 de deux branches 80, que comporte le ressort 8, et dont au moins une partie constitue la paire d'organes de verrouillage 6.

Dans la variante de réalisation dans laquelle l'élément mobile (3 ; 3') est constitué par un pied 30, le moyen de montage 4, que comporte la remorque pliante 1, est associé au plateau 2 en étant rendu solidaire (plus particulièrement fixement) de ce plateau 2 et comporte ledit au moins un organe de verrouillage complémentaire 7.

En fait et tel que mentionné ci-dessus, ce moyen de montage 4 comporte une chape 40 comportant, d'une part, une embase 400 rendue solidaire (plus particulièrement fixement) du plateau 2 et, d'autre part, deux ailes 401, qui s'étendent (de manière perpendiculaire) à partir de l'embase 400, entre lesquelles s'étend une partie du pied 30, et par rapport auxquelles ce pied 30 est monté en rotation.

Ladite chape 40 comporte, alors, au moins un organe de verrouillage complémentaire 7, plus particulièrement au moins une paire d'organes de verrouillage complémentaires 7, de préférence plusieurs paires d'organes de verrouillage complémentaires 7 (pour une immobilisation du pied 30 dans plusieurs positions différentes).

A ce propos, on observera qu'au moins l'une des ailes 401 de cette chape 40 comporte, alors, au moins un organe de verrouillage complémentaire 7, plus particulièrement sous la forme d'un logement 10 tel que décrit ci-dessus.

Une telle aile 401 peut, en fait, comporter une pluralité d'organes de verrouillage complémentaires 7, ceci pour une immobilisation du pied 30 dans plusieurs positions (notamment dépliée comme visible figure 3 et repliée comme visible figures 4 et 5).

Dans le cas d'un système de verrouillage 5 comportant au moins une paire d'organes de verrouillage élastiques 6 et au moins une paire d'organes de verrouillage complémentaires 7, les ailes 401 de la chape 40 comportent, en fait, chacune, au moins l'un des organes de verrouillage complémentaires 7 d'au moins une de ces paires d'organes de verrouillage complémentaires 7.

Selon un mode de réalisation préféré dans lequel le système d'immobilisation 5 comporte une paire d'organes de verrouillage élastique 6 ainsi que plusieurs paires d'organes de verrouillage complémentaires 7 (figures 3 à 5), ces ailes 401 comportent, alors chacune, l'un des organes de verrouillage complémentaires 7 de chacune de ces paires d'organes de verrouillage complémentaires 7.

Une autre caractéristique de cette première variante consiste en ce que le ou les moyens de commande 9, que comporte la remorque pliante 1 (plus particulièrement le pied 30 de cette remorque), peuvent être conformes au premier type mentionné ci-dessus et dans lequel un tel moyen de commande 9 est conçu pour être commandé manuellement, plus particulièrement par les doigts d'un utilisateur de cette remorque 1. Un tel moyen de commande 9 est alors constitué, comme décrit ci-dessus, par une partie de la portion latérale 801 de la ou des branches (80 ; 80') du ou des ressorts 8.

Selon une deuxième variante de réalisation, le ou les éléments mobiles (3 ; 3'), que comporte la remorque pliante 1, peuvent être constitués, chacun, par un support de roue (31 ; 31') qui présente les caractéristiques décrites ci-dessus.

Dans une telle variante, le système d'immobilisation 5 comporte, d'une part, au moins un organe de verrouillage élastique 6 qui est associé (directement ou indirectement) à un tel élément mobile (3 ; 3') et, d'autre part, au moins un organe de verrouillage complémentaire 7, qui est associé (directement ou indirectement) au plateau 2.

Tel que visible sur les figures 6 et 7, ce système d'immobilisation 5 comporte, alors, également, un premier bras 50, qui est associé à un tel élément mobile (3 ; 3'), et qui comporte ledit au moins un organe de verrouillage élastique 6 (qui est, alors, associé indirectement à l'élément mobile 3 ; 3') et, d'autre part, un deuxième bras 51, qui est associé au plateau 2, qui est mobile en rotation par rapport au premier bras 50, et qui comporte ledit au moins un organe de verrouillage complémentaire 7 (qui est, alors, associé indirectement au plateau 2).

En ce qui concerne le premier bras 50, celui-ci est associé audit élément mobile (3 ; 3') en étant monté en rotation sur cet élément mobile (3 ; 3'), plus particulièrement en étant monté en rotation sur la poutre support 310 que comporte le support de roue (31 ; 31') qui constitue un tel élément mobile (3 ; 3'). En fait, ce premier bras 50 est associé audit élément mobile (3 ; 3') en étant rapporté de manière pivotante sur cet élément mobile (3 ; 3'), plus particulièrement sur la poutre support 310 de cet élément mobile (3 ; 3').

Ce premier bras 50 comporte ledit au moins un organe de verrouillage élastique 6 de sorte que ledit au moins un organe de verrouillage élastique 6 est associé audit élément mobile (3 ; 3'), ceci de manière indirecte.

A ce propos, on observera que ce premier bras 50 comporte, en fait, au moins un ressort 8, qui présente les caractéristiques décrites ci-dessus, et qui comporte en particulier au moins une branche (80 ; 80') qui comporte un tel organe de verrouillage élastique 6 ou l'un de ces organes de verrouillage élastiques 6. Plus précisément et tel que décrit ci-dessus, un tel organe de verrouillage élastique 6 adopte la forme d'une partie de la portion latérale 801 que comporte la branche 80 ou l'une des branches (80 ; 80') de ce ressort 8.

En fait, un tel ressort 8 est positionné en partie à l'intérieur du premier bras 50 (c'est plus particulièrement la portion rectiligne 800 de la ou des branches (80 ; 80') de ce ressort 8 qui s'étend à l'intérieur de ce premier bras 50) et s'étend en partie à l'extérieur de ce premier bras 50 (c'est plus particulièrement la portion latérale 801 de la ou des branches (80 ; 80') de ce ressort 8 qui s'étend à l'extérieur de ce premier bras 50). Ce premier bras 50 comporte, alors, latéralement, au moins une fente 500 au travers de laquelle s'étend la portion latérale 801, que comporte la branche 80 ou l'une des branches (80 ; 80') du ressort 8, et qui comporte l'organe de verrouillage élastique 6 ou l'un des organes de verrouillage élastique 6.

Un mode préféré de réalisation (illustré figures 6 et 7) consiste en ce qu'un tel premier bras 50 comporte, en fait, au moins une paire d'organes de verrouillage élastiques 6 présentant, chacun, les caractéristiques décrites ci-dessus. Dans un pareil cas, ce premier bras 50 comporte deux fentes 500 (plus particulièrement deux faces opposées de ce premier bras 50 comportent chacune une telle fente 500) au travers desquelles s'étendent les portions latérales 801 de deux branches 80, que comporte le ressort 8, et dont au moins une partie constitue la paire d'organes de verrouillage 6.

En ce qui concerne le deuxième bras 51, celui-ci 51 est associé au plateau 2 en étant monté en rotation sur ce plateau 2, plus particulièrement en étant rapporté de manière pivotante sur ce plateau 2.

Ce deuxième bras 51 comporte, alors, ledit au moins un organe de verrouillage complémentaire 7, qui présente les caractéristiques mentionnées ci-dessus, et qui est, alors, associé au plateau 2, ceci de manière indirecte. En particulier, un tel organe de verrouillage complémentaire 7 peut adopter la forme d'un logement 10, notamment constitué par une fente.

Un mode préféré de réalisation (illustré figures 6 et 7) consiste, en fait, en ce qu'un tel deuxième bras 51 comporte au moins une paire d'organes de verrouillage complémentaires 7 présentant, chacun, les caractéristiques décrites ci-dessus. Les organes de verrouillages complémentaires 7 d'une telle paire d'organes de verrouillages complémentaires 7 sont conçus pour se positionner de part et d'autre du premier bras 50, ceci pour coopérer avec les organes de verrouillage élastiques 6 d'une paire d'organes de verrouillage élastique 6 que comporte ce premier bras 50.

Une autre caractéristique de cette deuxième variante consiste en ce que le ou les moyens de commande 9, que comporte la remorque pliante 1, peuvent être conformes au premier type mentionné ci-dessus et dans lequel un tel moyen de commande 9 est conçu pour être commandé manuellement, plus particulièrement par les doigts d'un utilisateur de cette remorque 1. C'est, plus particulièrement, le premier bras 50 de cette remorque 1 qui comporte, alors, un tel moyen de commande 9 qui est constitué, comme décrit ci-dessus, par une partie de la portion latérale 801 de la ou des branches (80 ; 80') du ou des ressorts 8 que comporte ce premier bras 50.

Cependant, ce ou ces moyens de commande 9 peuvent, encore, être conformes au deuxième type mentionné ci-dessus et dans lequel ce ou ces moyens de commande 9 sont conçus pour commander le passage de l'organe de verrouillage élastique 6 ou d'au moins l'un des organes de verrouillage élastiques 6 d'une position active de verrouillage (figures 6 et 7) à une position inactive de verrouillage, ceci sous l'impulsion du déplacement de l'élément mobile 3 (plus particulièrement du support de roue 31 ; 31') par rapport au plateau 2 (plus particulièrement lors du dépliement de ce support de roue 31 ; 31') et/ou du déplacement d'au moins une pièce (constituée par le premier bras 50) associée à cet élément mobile 3 et par rapport à cet élément mobile 3 (notamment sous l'effet du dépliement du support de roue 31 ; 31') et/ou du déplacement d'au moins une pièce (constituée par le deuxième bras 51) associée au plateau 2 et par rapport à ce plateau 2 (notamment sous l'effet du dépliement du support de roue 31 ; 31').

Selon un mode particulier de réalisation, c'est, plus particulièrement, le deuxième bras 51 qui comporte un tel moyen de commande 9 lequel est constitué par une surface d'appui que comporte ce deuxième bras 51, plus particulièrement une extrémité libre de ce deuxième bras 51.

Quoi qu'il en soit, la remorque pliante 1 comporte, de préférence, d'une part, plusieurs éléments mobiles (3 ; 3'), chacun constitué par un support de roue (31 ; 31') présentant les caractéristiques décrites ci-dessus et, d'autre part, plusieurs systèmes d'immobilisation 5 présentant les caractéristiques décrites ci-dessus et comportant, chacun, au moins un premier bras 50 et un deuxième bras 51, là encore, présentant les caractéristiques décrites ci-dessus.

Selon une troisième variante de réalisation, le ou les éléments mobiles (3 ; 3'), que comporte la remorque pliante 1, peuvent être constitués, chacun, par une ridelle (32 ; 32') qui présente les caractéristiques décrites ci-dessus.

Dans une telle variante, le système d'immobilisation 5 comporte, d'une part, au moins un organe de verrouillage élastique 6 qui est associé à un tel élément mobile (3 ; 3'), plus particulièrement que comporte un tel élément mobile (3 ; 3') et qui est, alors, associé directement à un tel élément mobile (3 ; 3') et, d'autre part, au moins un organe de verrouillage complémentaire 7 qui est également associé à un tel élément mobile (3 ; 3'), notamment de manière indirecte comme il sera décrit ci-dessous.

Tel que visible sur les figures 8 et 9, ce système d'immobilisation 5 comporte, alors, également, un loquet 52, qui est associé à ladite ridelle (32 ; 32') en étant monté de manière mobile (plus particulièrement en rotation, notamment en étant rapporté de manière mobile en rotation) sur cette ridelle (32 ; 32'), qui comporte ledit au moins un organe de verrouillage complémentaire 7 (qui est, alors, associé de manière indirecte à l'élément mobile 3 ; 3'), et qui comporte un crochet d'accrochage 11 configuré pour coopérer avec une autre ridelle (32' ; 32) que comporte la remorque pliante 1 (figure 9), ceci en vue d'une immobilisation de cette ridelle (32 ; 32') par rapport à cette autre ridelle (32' ; 32) et, par conséquent, par rapport au plateau 2.

Tel que mentionné ci-dessus, le système d'immobilisation 5 comporte au moins un organe de verrouillage élastique 6 qui est associé à l'élément mobile (3 ; 3'). A ce propos, on observera que la ridelle (32 ; 32'), qui constitue un tel élément mobile (3 ; 3'), comporte, en fait, au moins un ressort 8, qui présente les caractéristiques décrites ci-dessus, et qui comporte en particulier au moins une branche (80 ; 80') qui comporte un tel organe de verrouillage élastique 6 ou l'un de ces organes de verrouillage élastiques 6, un tel organe de verrouillage 6 étant alors associé directement à une telle ridelle (32 ; 32'), donc, à un tel élément mobile (3 ; 3'). Plus précisément et tel que décrit ci-dessus, un tel organe de verrouillage élastique 6 adopte la forme d'une partie de la portion latérale 801 que comporte la branche 80 ou l'une des branches (80 ; 80') de ce ressort 8.

En fait, un tel ressort 8 est positionné en partie à l'intérieur d'une telle ridelle 32 (c'est plus particulièrement la portion rectiligne 800 de la ou des branches (80 ; 80') de ce ressort 8 qui s'étend à l'intérieur de cette ridelle 32) et s'étend en partie à l'extérieur de cette ridelle 32 (c'est plus particulièrement la portion latérale 801 de la ou des branches 80 ; 80' de ce ressort 8 qui s'étend à l'extérieur de cette ridelle 32). Cette ridelle (32 ; 32') comporte, alors, latéralement, au moins une fente 320 au travers de laquelle s'étend la portion latérale 801, que comporte la branche 80 ou l'une des branches (80 ; 80') du ressort 8, et qui comporte l'organe de verrouillage élastique 6 ou l'un des organes de verrouillage élastique 6.

Un mode préféré de réalisation (illustré figures 8 et 9) consiste en ce qu'une telle ridelle (32 ; 32') comporte, en fait, au moins une paire d'organes de verrouillage élastiques 6 présentant, chacun, les caractéristiques décrites ci-dessus. Dans un pareil cas, cette ridelle (32 ; 32') comporte deux fentes 320 (plus particulièrement deux faces opposées de cette ridelle 32 ; 32' comportent chacune une telle fente 320) au travers desquelles s'étendent les portions latérales 801 de deux branches (80 ; 80'), que comporte le ressort 8, et dont au moins une partie constitue la paire d'organes de verrouillage 6.

En ce qui concerne ledit loquet 52, celui-ci est associé audit élément mobile (3 ; 3') en étant monté en rotation (plus particulièrement en étant rapporté de manière mobile en rotation) sur cet élément mobile (3 ; 3'), plus particulièrement sur la ridelle (32 ; 32') constituant un tel élément mobile (3 ; 3') .

Ce loquet 52 comporte, alors, ledit au moins un organe de verrouillage complémentaire 7, qui présente les caractéristiques mentionnées ci-dessus, et qui est, alors, associé indirectement à un tel élément mobile (3 ; 3'). En particulier, un tel organe de verrouillage complémentaire 7 peut adopter la forme d'un logement 10, notamment constitué par une fente.

Un mode préféré de réalisation (illustré figures 8 et 9) consiste, en fait, en ce qu'un tel loquet 52 comporte au moins une paire d'organes de verrouillage complémentaires 7 présentant, chacun, les caractéristiques décrites ci-dessus. Les organes de verrouillage complémentaires 7 d'une telle paire d'organes de verrouillages complémentaires 7 sont conçus pour se positionner de part et d'autre de la ridelle (32 ; 32'), ceci pour coopérer avec les organes de verrouillage élastiques 6 de la paire d'organes de verrouillage élastiques 6 que comporte cette ridelle (32 ; 32').

Une autre caractéristique de cette troisième variante consiste en ce que le ou les moyens de commande 9, que comporte la remorque pliante 1, peuvent être conformes au premier type mentionné ci-dessus et dans lequel un tel moyen de commande 9 est conçu pour être commandé manuellement, plus particulièrement par les doigts d'un utilisateur de cette remorque 1. C'est, plus particulièrement, la ridelle (32 ; 32') de cette remorque pliante 1 qui comporte, alors, un tel moyen de commande 9 qui est constitué, comme décrit ci-dessus, par une partie de la portion latérale 801 de la ou des branches (80 ; 80') du ou des ressorts 8 que comporte cette ridelle (32 ; 32').

Cependant, ce ou ces moyens de commande 9 peuvent, encore, être conformes au deuxième type mentionné ci-dessus et dans lequel ce ou ces moyens de commande 9 sont conçus pour commander le passage de l'organe de verrouillage élastique 6 ou d'au moins l'un des organes de verrouillage élastiques 6 d'une position active de verrouillage (figures 8 et 9) à une position inactive de verrouillage, ceci sous l'impulsion du déplacement, par rapport à cet élément mobile (3 ; 3'), d'au moins une pièce, constituée par le loquet 52, et associée à cet élément mobile (3 ; 3'), ceci tel que décrit ci-dessus.

Selon un mode particulier de réalisation, c'est, plus particulièrement, le loquet 52 qui comporte un tel moyen de commande 9 lequel est constitué par une surface d'appui que comporte ce loquet 52, plus particulièrement une extrémité libre de ce loquet 52.

Quoi qu'il en soit, la remorque pliante 1 comporte, de préférence, au moins un élément mobile (3 ; 3') constitué, chacun, par une ridelle (32 ; 32') et comportant au moins un système d'immobilisation 5. En particulier, cette remorque pliante 1 comporte au moins un tel élément mobile (3 ; 3') comportant, chacun, une pluralité de systèmes d'immobilisation 5 présentant les caractéristiques décrites ci-dessus.

Selon un mode de réalisation préféré, cette remorque pliante 1 comporte, d'une part, plusieurs éléments mobiles (3 ; 3'), chacun constitué par une ridelle (32 ; 32') présentant les caractéristiques décrites ci-dessus et, d'autre part, plusieurs systèmes d'immobilisation 5, présentant les caractéristiques décrites ci-dessus, et comportant, chacun, un loquet 52, là encore, présentant les caractéristiques décrites ci-dessus.

A ce propos, on observera qu'au moins une partie de ces éléments mobiles (3 ; 3') comporte, alors, chacun, une pluralité de systèmes d'immobilisation 5 (figure 1). En fait, c'est, plus particulièrement, la ridelle arrière 32 orientée vers l'arrière de la remorque pliante 1 et/ou la ridelle avant 32 orientée vers l'avant de la remorque pliante 1 qui comportent une pluralité de systèmes d'immobilisation 5. Ceci permet, avantageusement, de replier une telle ridelle latérale 32' par-dessus une telle ridelle arrière 32 et/ou avant 32, ceci sans entraver un tel repliement.

## Revendications

1. Remorque de transport pliante (1) comportant un plateau (2), au moins un élément mobile (3 ; 3') par rapport à ce plateau (2), au moins un moyen de montage (4) pour monter un tel élément mobile (3 ; 3') de manière mobile par rapport au plateau (2) ceci entre une position dépliée et une position repliée par rapport à ce plateau (2), et au moins un système d'immobilisation (5) pour immobiliser de manière réversible un tel élément mobile (3 ; 3') par rapport audit plateau (2) et/ou par rapport à un autre élément mobile (3' ; 3), ceci dans au moins une position, un tel système d'immobilisation (5) comportant, d'une part, au moins un organe de verrouillage élastique (6) qui est associé à un tel élément mobile (3 ; 3') et, d'autre part, au moins un organe de verrouillage complémentaire (7), qui est associé au plateau (2) ou à un tel élément mobile (3 ; 3'), et qui coopère avec ledit au moins un organe de verrouillage élastique (6) ceci en vue de l'immobilisation d'un tel élément mobile (3 ; 3') par rapport au plateau (2) et/ou à l'autre élément mobile (3' ; 3), **caractérisée par le fait qu'**elle comporte, encore, au moins un ressort (8), qui est associé à l'élément mobile (3 ; 3') ou à l'un des éléments mobiles (3 ; 3'), et qui comporte au moins une branche (80 ; 80') qui comporte l'organe de verrouillage élastique (6) ou l'un des organes de verrouillage élastiques (6) .

2. Remorque de transport pliante (1) selon la revendication 1, **caractérisée par le fait que** le système d'immobilisation (5) comporte, d'une part, au moins une paire d'organes de verrouillage élastiques (6) qui est associée à un tel élément mobile (3 ; 3') et, d'autre part, au moins une paire d'organes de verrouillage complémentaires (7), qui est associée au plateau (2) ou à un tel élément mobile (3 ; 3'), et que chaque organe de verrouillage complémentaire (7) d'une telle paire d'organes de verrouillage complémentaires (7) est configuré pour coopérer avec l'un des organes de verrouillage élastiques (6) d'une telle paire d'organes de verrouillage élastiques (6).

3. Remorque de transport pliante (1) selon l'une quelconque des revendications 1 ou 2, **caractérisée par le fait que** le système d'immobilisation (5) comporte, d'une part, une paire d'organes de verrouillage (6) qui est associée à un tel élément mobile (3 ; 3') et, d'autre part, plusieurs paires d'organes de verrouillage complémentaires (7), qui sont associées au plateau (2) ou à un tel élément mobile (3 ; 3'), et qu'une de ces paires d'organes de verrouillage complémentaires (7) coopère avec la paire d'organes de verrouillage élastique (6) pour une immobilisation de l'élément mobile (3 ; 3') dans une position déployée tandis qu'une autre de ces paires d'organes de verrouillage complémentaires (7) coopère avec la paire d'organes de verrouillage élastiques (6) pour une immobilisation de l'élément mobile (3 ; 3') dans une position repliée.

4. Remorque de transport pliante (1) selon l'une quelconque des revendications 2 ou 3, **caractérisée par le fait qu'**elle comporte au moins un ressort (8), qui est associé à l'élément mobile (3 ; 3') ou à l'un des éléments mobiles (3 ; 3'), et qui comporte au moins deux branches (80 ; 80'), qui sont mobiles l'une par rapport à l'autre, et qui comportent chacune l'un des organes de verrouillage élastiques (6) de la paire d'organes de verrouillage élastiques (6) ou de l'une des paires d'organes de verrouillage élastiques (6).

5. Remorque de transport pliante (1) selon la revendication 4, **caractérisée par le fait que** les deux branches (80 ; 80'), s'étendent selon un même plan, et sont symétriques par rapport à un plan médian perpendiculaire au plan selon lequel s'étendent ces deux branches (80 ; 80').

6. Remorque de transport pliante (1) selon l'une quelconque des revendications précédentes, **caractérisée par le fait que** la ou les branches (80 ; 80') comportent, d'une part, au moins une portion rectiligne (800) s'étendant selon une direction déterminée et, d'autre part, une portion latérale (801), qui s'étend dans le prolongement d'une telle portion rectiligne (800) ainsi que latéralement par rapport à cette direction déterminée, et dont au moins une partie constitue l'organe de verrouillage élastique (6) ou l'un des organes de verrouillage élastiques (6).

7. Remorque de transport pliante (1) selon l'une quelconque des revendications précédentes, **caractérisée par le fait qu'**elle comporte au moins un logement (10), qui est associé au plateau (2), à l'élément mobile (3 ; 3') ou à l'un des éléments mobiles (3 ; 3'), et qui constitue l'organe de verrouillage complémentaire (7) ou l'un des organes de verrouillage complémentaires (7).

8. Remorque de transport pliante (1) selon l'une quelconque des revendications 2 ou 3, **caractérisée par le fait qu'**elle comporte au moins une paire de logements (10), qui est associée au plateau (2), à l'élément mobile (3 ; 3') ou à l'un des éléments mobiles (3 ; 3'), et qui constitue la paire d'organes de verrouillage complémentaires (7) ou l'une des paires d'organes de verrouillage complémentaires (7).

9. Remorque de transport pliante (1) selon l'une quelconque des revendications précédentes, **caractérisée par le fait qu'**elle comporte au moins un moyen de commande (9) pour commander le passage de l'organe de verrouillage élastique (6) ou d'au moins l'un des organes de verrouillage élastiques (6) d'une position active de verrouillage à une position inactive de verrouillage par rapport à l'organe de verrouillage complémentaire (7) ou à au moins l'un des organes de verrouillage complémentaires (7).

10. Remorque de transport pliante (1) selon la revendication 9, **caractérisée par le fait que** le moyen de commande (9) est conçu, soit pour être commandé manuellement, soit pour commander sous l'impulsion du déplacement de l'élément mobile (3 ; 3') par rapport au plateau (2) et/ou du déplacement d'au moins une pièce associée à cet élément mobile (3) et par rapport à cet élément mobile (3 ; 3') et/ou du déplacement d'au moins une pièce associée au plateau (2) et par rapport à ce plateau (2).

11. Remorque de transport pliante (1) selon l'une quelconque des revendications précédentes, **caractérisée par le fait que** l'élément mobile (3 ; 3') est constitué par un pied (30) qui comporte ledit au moins un organe de verrouillage élastique (6) tandis que le moyen de montage (4) est associé au plateau (2) en étant rendu solidaire de ce plateau (2) et comporte ledit au moins un organe de verrouillage complémentaire (7) .

12. Remorque de transport pliante (1) selon les revendications 2 et 11, **caractérisée par le fait que** le pied (30) comporte ladite au moins paire d'organes de verrouillage élastiques (6) et que le moyen de montage (4) comporte une chape (40) comportant, d'une part, une embase (400) rendue solidaire du plateau (2) et, d'autre part, deux ailes (401), qui s'étendent à partir de l'embase (400), entre lesquelles s'étend une partie du pied (30), par rapport auxquelles ce pied (30) est monté en rotation, et qui comportent, chacune, l'un des organes de verrouillage complémentaires (7) d'au moins une des paires d'organes de verrouillage complémentaires (7).

13. Remorque de transport pliante (1) selon l'une quelconque des revendications précédentes, **caractérisée par le fait que** l'élément mobile (3 ; 3') est constitué par un support de roue (31 ; 31') tandis que le système d'immobilisation (5) comporte, encore, d'une part, un premier bras (50), qui est associé à un tel élément mobile (3 ; 3'), et qui comporte ledit au moins un organe de verrouillage élastique (6) et, d'autre part, un deuxième bras (51), qui est associé au plateau (2), qui est mobile en rotation par rapport au premier bras (50), et qui comporte ledit au moins un organe de verrouillage complémentaire (7) .

14. Remorque de transport pliante (1) selon l'une quelconque des revendications précédentes, **caractérisée par le fait que** l'élément mobile (3 ; 3') est constitué par une ridelle (32 ; 32') qui comporte ledit au moins un organe de verrouillage élastique (6) tandis que le système d'immobilisation (5) comporte, encore, un loquet (52), qui est associé à ladite ridelle (32 ; 32') en étant monté de manière mobile sur cette ridelle (32 ; 32'), qui comporte ledit au moins un organe de verrouillage complémentaire (7), et qui comporte un crochet d'accrochage (11) configuré pour coopérer avec une autre ridelle (32' ; 32) que comporte la remorque (1), ceci en vue d'une immobilisation de cette ridelle (32 ; 32') par rapport au plateau (2).

## Patentansprüche

1. Zusammenklappbarer Transportanhänger (1) umfassend eine Plattform (2), mindestens ein in Bezug auf diese Plattform (2) bewegliches Element (3; 3'), mindestens ein Montagemittel (4), um ein solches bewegliches Element (3; 3') in Bezug auf die Plattform (2) zwischen einer ausgeklappten Position und einer zusammengeklappten Position in Bezug auf diese Plattform (2) beweglich zu montieren, und mindestens ein Immobilisierungssystem (5), um ein solches bewegliches Element (3; 3') in Bezug auf die Plattform (2) und/oder in Bezug auf ein anderes bewegliches Element (3'; 3) in mindestens einer Position reversibel zu immobilisieren, wobei ein solches Immobilisierungssystem (5) einerseits mindestens eine elastische Verriegelungseinrichtung (6), die einem solchen beweglichen Element (3; 3') zugeordnet ist, und andererseits mindestens eine komplementäre Verriegelungseinrichtung (7) umfasst, die der Plattform (2) oder einem solchen beweglichen Element (3; 3') zugeordnet ist und die mit der mindestens einen elastischen Verriegelungseinrichtung (6) zusammenwirkt, um ein solches bewegliches Element (3; 3') in Bezug auf die Plattform (2) und/oder das andere bewegliche Element (3'; 3) zu immobilisieren, **dadurch gekennzeichnet, dass** er auch mindestens eine Feder (8) umfasst, die dem beweglichen Element (3; 3') oder einem der beweglichen Elemente (3; 3') zugeordnet ist und die mindestens einen Schenkel (80; 80') umfasst, der die elastische Verriegelungseinrichtung (6) oder eine der elastischen Verriegelungseinrichtungen (6) umfasst.

2. Zusammenklappbarer Transportanhänger (1) nach Anspruch 1, **dadurch gekennzeichnet, dass** das Immobilisierungssystem (5) einerseits mindestens ein Paar elastischer Verriegelungseinrichtungen (6), das einem solchen beweglichen Element (3; 3') zugeordnet ist, und andererseits mindestens ein Paar komplementärer Verriegelungseinrichtungen (7) umfasst, das der Plattform (2) oder einem solchen beweglichen Element (3; 3') zugeordnet ist, und dass jede komplementäre Verriegelungseinrichtung (7) eines solchen Paares von komplementären Verriegelungseinrichtungen (7) konfiguriert ist, um mit einer der elastischen Verriegelungseinrichtungen (6) eines solchen Paares von elastischen Verriegelungseinrichtungen (6) zusammenzuwirken.

3. Zusammenklappbarer Transportanhänger (1) nach einem der Ansprüche 1 oder 2, **dadurch gekennzeichnet, dass** das Immobilisierungssystem (5) einerseits ein Paar von Verriegelungseinrichtungen (6), das einem solchen beweglichen Element (3; 3') zugeordnet ist, und andererseits mehrere Paare von komplementären Verriegelungseinrichtungen (7) umfasst, die der Plattform (2) oder einem solchen beweglichen Element (3; 3') zugeordnet sind, und dass eines dieser Paare von komplementären Verriegelungseinrichtungen (7) mit dem Paar von elastischen Verriegelungseinrichtungen (6) zur Immobilisierung des beweglichen Elements (3; 3') in einer ausgeklappten Position zusammenwirkt, während ein anderes dieser Paare von komplementären Verriegelungseinrichtungen (7) mit dem Paar von elastischen Verriegelungseinrichtungen (6) zur Immobilisierung des beweglichen Elements (3; 3') in einer zusammengeklappten Position zusammenwirkt.

4. Zusammenklappbarer Transportanhänger (1) nach einem der Ansprüche 2 oder 3, **dadurch gekennzeichnet, dass** er mindestens eine Feder (8) aufweist, die dem beweglichen Element (3; 3') oder einem der beweglichen Elemente (3; 3') zugeordnet ist und die mindestens zwei Schenkel (80; 80') aufweist, die relativ zueinander beweglich sind, und die jeweils eine der elastischen Verriegelungseinrichtungen (6) des Paares von elastischen Verriegelungseinrichtungen (6) oder eines der Paare von elastischen Verriegelungseinrichtungen (6) umfassen.

5. Zusammenklappbarer Transportanhänger (1) nach Anspruch 4, **dadurch gekennzeichnet, dass** sich die beiden Schenkel (80; 80') in derselben Ebene erstrecken und in Bezug auf eine Mittelebene, die senkrecht zu der Ebene steht, in der sich diese beiden Schenkel (80; 80') erstrecken, symmetrisch sind.

6. Zusammenklappbar Transportanhänger (1) nach einem der vorhergehenden Ansprüche, **dadurch gekennzeichnet, dass** der oder die Schenkel (80; 80') einerseits mindestens einen geradlinigen Abschnitt (800), der sich in einer vorbestimmten Richtung erstreckt, und andererseits einen seitlichen Abschnitt (801) umfassen, der sich in der Verlängerung eines solchen geradlinigen Abschnitts (800) sowie in Bezug auf diese vorbestimmte Richtung seitlich erstreckt, und wobei mindestens ein Teil die elastische Verriegelungseinrichtung (6) oder eine der elastischen Verriegelungseinrichtungen (6) bildet.

7. Zusammenklappbarer Transportanhänger (1) nach einem der vorhergehenden Ansprüche, **dadurch gekennzeichnet, dass** er mindestens eine Aufnahme (10) aufweist, der der Plattform (2), dem beweglichen Element (3; 3') oder einem der beweglichen Elemente (3; 3') zugeordnet ist und der die komplementäre Verriegelungseinrichtung (7) oder eine der komplementären Verriegelungseinrichtungen (7) bildet.

8. Zusammenklappbarer Transportanhänger (1) nach einem der Ansprüche 2 oder 3, **dadurch gekennzeichnet, dass** er mindestens ein Paar von Aufnahmen (10) aufweist, das der Plattform (2), dem beweglichen Element (3; 3') oder einem der beweglichen Elemente (3; 3') zugeordnet ist und das Paar von komplementären Verriegelungseinrichtungen (7) oder eines der Paare von komplementären Verriegelungseinrichtungen (7) bildet.

9. Zusammenklappbarer Transportanhänger (1) nach einem der vorhergehenden Ansprüche, **dadurch gekennzeichnet, dass** er mindestens ein Steuermittel (9) zum Steuern des Übergangs der elastischen Verriegelungseinrichtung (6) oder mindestens einer der elastischen Verriegelungseinrichtungen (6) von einer aktiven Verriegelungsposition in eine inaktive Verriegelungsposition in Bezug auf die komplementäre Verriegelungseinrichtung (7) oder mindestens eine der komplementären Verriegelungseinrichtungen (7) umfasst.

10. Zusammenklappbarer Transportanhänger (1) nach Anspruch 9, **dadurch gekennzeichnet, dass** das Steuermittel (9) ausgebildet ist, um entweder manuell gesteuert zu werden oder um angetrieben durch die Verschiebung des beweglichen Elements (3; 3') in Bezug auf die Plattform (2) und/oder der Verschiebung mindestens eines diesem beweglichen Element (3) zugeordneten Teils und in Bezug auf dieses bewegliche Element (3; 3') und/oder der Verschiebung mindestens eines der Plattform (2) zugeordneten Teils und in Bezug auf diese Plattform (2) zu steuern.

11. Zusammenklappbarer Transportanhänger (1) nach einem der vorhergehenden Ansprüche, **dadurch gekennzeichnet, dass** das bewegliche Element (3; 3') durch einen Fuß (30) gebildet ist, der die mindestens eine elastische Verriegelungseinrichtung (6) umfasst, während das Montagemittel (4) der Plattform (2) zugeordnet ist, indem es mit dieser Plattform (2) fest verbunden wird, und die mindestens eine komplementäre Verriegelungseinrichtung (7) umfasst.

12. Zusammenklappbarer Transportanhänger (1) nach den Ansprüchen 2 und 11, **dadurch gekennzeichnet, dass** der Fuß (30) das mindestens eine Paar von elastischen Verriegelungseinrichtungen (6) umfasst und dass das Montagemittel (4) ein Gabelstück (40) umfasst, das einerseits eine mit der Plattform (2) fest verbundene Fußfläche (400) und andererseits zwei sich von der Fußfläche (400) aus erstreckende Flügel (401), zwischen denen sich ein Teil des Fußes (30) erstreckt, umfasst, in Bezug auf die dieser Fuß (30) drehbar befestigt ist und die jeweils eine der komplementären Verriegelungseinrichtungen (7) von mindestens einem der Paare von komplementären Verriegelungseinrichtungen (7) umfassen.

13. Zusammenklappbarer Transportanhänger (1) nach einem der vorhergehenden Ansprüche, **dadurch gekennzeichnet, dass** das bewegliche Element (3; 3') durch einen Radträger (31; 31') gebildet wird, während das Immobilisierungssystem (5) ferner einerseits einen ersten Arm (50) umfasst, der einem solchen beweglichen Element (3; 3') zugeordnet ist und der die mindestens eine elastische Verriegelungseinrichtung (6) aufweist, und andererseits einen zweiten Arm (51), der mit der Plattform (2) verbunden ist, der in Bezug auf den ersten Arm (50) drehbar ist und der die mindestens eine komplementäre Verriegelungseinrichtung (7) umfasst.

14. Zusammenklappbarer Transportanhänger (1) nach einem der vorhergehenden Ansprüche, **dadurch gekennzeichnet, dass** das bewegliche Element (3; 3') durch eine Seitenwand (32; 32') gebildet ist, die die mindestens eine elastische Verriegelungseinrichtung (6) umfasst, während das Immobilisierungssystem (5) ferner eine Fallklinke (52) umfasst, die der Seitenwand (32; 32') zugeordnet und an dieser Seitenwand (32; 32') beweglich befestigt ist, die die mindestens eine komplementäre Verriegelungseinrichtung (7) umfasst, und die einen Montagehaken (11) aufweist, der so konfiguriert ist, dass er mit einer anderen, den Anhänger (1) bildenden Seitenwand (32'; 32) zusammenwirkt, um diese Seitenwand (32; 32') in Bezug auf die Plattform (2) zu immobilisieren.

## Claims

1. Folding transport trailer (1) comprising a plate (2), at least one element (3; 3') mobile in relation to this plate (2), at least one assembly means (4) to assemble such a mobile element (3; 3') in a mobile manner in relation to the plate (2) between an unfolded position and a folded position in relation to this plate (2), and at least one immobilization system (5) to immobilize in a reversible manner such a mobile element (3; 3') in relation to said plate (2) and/or in relation to another mobile element (3'; 3), in at least one position, such an immobilization system (5) comprising, on the one hand, at least one resilient locking component (6) that is associated with such a mobile element (3; 3') and, on the other, at least one complementary locking component (7), which is associated with the plate (2) or with such a mobile element (3: 3'), and which cooperates with said at least one resilient locking component (6) in order to immobilize such a mobile element (3; 3') in relation to the plate (2) and/or to the other mobile element (3'; 3), **characterized in that** it also comprises at least one spring (8), which is associated with the mobile element (3; 3') or with one of the mobile elements (3; 3'), and which comprises at least one branch (80; 80') that comprises the resilient locking component (6) or one of the resilient locking components (6).

2. Folding transport trailer (1) according to claim 1, **characterized in that** the immobilization system (5) comprises, on the one hand, at least one pair of resilient locking components (6) that is associated with such a mobile element (3; 3') and, on the other, at least one pair of complementary locking components (7), which is associated with the plate (2) or with such a mobile element (3; 3'), and **in that** each complementary locking component (7) of such a pair of complementary locking components (7) is configured to cooperate with one of the resilient locking components (6) of such a pair of resilient locking components (6).

3. Folding transport trailer (1) according to either claim 1 or claim 2, **characterized in that** the immobilization system (5) comprises, on the one hand, a pair or locking components (6) which is associated with such a mobile element (3; 3') and, on the other, a plurality of pairs of complementary locking components (7), which are associated with the plate (2) or with such a mobile element (3; 3'), and **in that** one of these pairs of complementary locking components (7) cooperates with the pair of resilient locking components (6) in order to immobilize the mobile element (3; 3') in a deployed position while another of these pairs of complementary locking components (7) cooperates with the pair of resilient locking components (6) in order to immobilize the mobile element (3; 3') in a folded position.

4. Folding transport trailer (1) according to either claim 2 or claim 3, **characterized in that** it comprises at least one spring (8), which is associated with the mobile element (3; 3') or with one of the mobile elements (3; 3'), and which comprises at least two branches (80; 80'), which are mobile in relation to one another, and which each comprise one of the resilient locking components (6) of the pair of resilient locking components (6) or of one of the pairs of resilient locking components (6).

5. Folding transport trailer (1) according to claim 4, **characterized in that** the two branches (80; 80') extend along the same plane and are symmetrical in relation to a median plane perpendicular to the plane along which these two branches (80; 80') extend.

6. Folding transport trailer (1) according to any of the preceding claims, **characterized in that** the branch or branches (80; 80') comprise, on the one hand, at least one straight portion (800) extending in a determined direction and, on the other, a lateral portion (801), which extends in the extension of such a straight portion (800) as well as laterally in relation to this determined direction, and of which at least one part forms the resilient locking component (6) or one of the resilient locking components (6).

7. Folding transport trailer (1) according to any of the preceding claims, **characterized in that** it comprises at least one housing (10), which is associated with the plate (2), with the mobile element (3; 3') or with one of the mobile elements (3; 3'), and which forms the complementary locking component (7) or one of the complementary locking components (7).

8. Folding transport trailer (1) according to either claim 2 or claim 3, **characterized in that** it comprises at least one pair of housings (10), which is associated with the plate (2), with the mobile element (3; 3') or with one of the mobile elements (3; 3'), and which forms the pair of complementary locking components (7) or one of the pairs of complementary locking components (7).

9. Folding transport trailer (1) according to any of the preceding claims, **characterized in that** it comprises at least one control means (9) to control the passage of the resilient locking component (6) or at least one of the resilient locking components (6) from an active locking position to an inactive locking position in relation to the complementary locking component (7) or to at least one of the complementary locking components (7).

10. Folding transport trailer (1) according to claim 9, **characterized in that** the control means (9) is designed either to be controlled manually, or to control under the impetus of the movement of the mobile element (3; 3') in relation to the plate (2) and/or the movement of at least one part associated with this mobile element (3) and in relation to this mobile element (3; 3') and/or the movement of at least one part associated with the plate (2) and in relation to this plate (2).

11. Folding transport trailer (1) according to any of the preceding claims, **characterized in that** the mobile element (3; 3') is formed by a foot (30) that comprises said at least one resilient locking component (6) while the assembly means (4) is associated with the plate (2) by being connected to this plate (2) and comprises said at least one complementary locking component (7).

12. Folding transport trailer (1) according to claims 2 and 11, **characterized in that** the foot (30) comprises said at least one pair of resilient locking components (6) and **in that** the assembly means (4) comprises a clevis (40) comprising, on the one hand, a base (400) connected to the plate (2) and, on the other, two wings (401), which extend from the base (400), between which extends a part of the foot (30), in relation to which this foot (30) is rotatably mounted, and which each comprise one of the complementary locking components (7) of at least one of the pairs of complementary locking components (7).

13. Folding transport trailer (1) according to any of the preceding claims, **characterized in that** the mobile element (3; 3') is formed by a wheel support (31; 31') while the immobilization system (5) also comprises, on the one hand, a first arm (50), which is associated with such a mobile element (3; 3'), and which comprises said at least one resilient locking component (6) and, on the other, a second arm (51), which is associated with the plate (2), which is rotatably mobile in relation to the first arm (50), and which comprises said at least one complementary locking element (7).

14. Folding transport trailer (1) according to any of the preceding claims, **characterized in that** the mobile element (3; 3') is formed by a side panel (32; 32') that comprises said at least one resilient locking component (6) while the immobilization system (5) also comprises a latch (52), which is associated with said side panel (32; 32') by being mounted in a mobile manner on said panel (32; 32'), which comprises said at least one complementary locking component (7), and which comprises a latching hook (11) configured so as to cooperate with another side panel (32; 32') that comprises the trailer (1) in order to immobilize this side panel (32; 32') in relation to the plate (2).
